# EUROPEAN PATENT APPLICATION

(11) **EP 3 291 598 A1**
(43) Date of publication of application: **07.03.2018**
(21) Application number: 16789467.4
(22) Date of filing: 22.02.2016
(51) Int. Cl.: H04W 28/04, H04W 28/18, H04W 72/04, H04W 72/08

(54) **BASE STATION AND USER DEVICE**

(30) Priority: 01.05.2015 JP 2015094272
(71) Applicant: NTT DOCOMO, INC., Chiyoda-ku Tokyo 100-6150 (JP)
(72) Inventor: UCHINO, Tooru, Tokyo 100-6150 (JP); TAKEDA, Kazuki, Tokyo 100-6150 (JP); TAKAHASHI, Hideaki, Tokyo 100-6150 (JP)
(74) Representative: Hoffmann Eitle
(86) International application number: PCT/JP2016/055092
(87) International publication number: WO 2016/178331

(57) **Abstract**

Techniques for controlling a transport block size to implement HARQ sharing are disclosed. One aspect of the present invention relates to a base station, comprising: a cell management unit configured to manage cells for radio communication with user equipment; and a MAC processing unit configured to control a retransmission operation via multiple cells by using HARQ sharing for managing one or more HARQ processes as a common HARQ process, wherein the cell management unit acquires communication quality of multiple HARQ sharing applied cells, and the MAC processing unit controls to activate transmission via the multiple cells with a minimum transmission data size among transmission data sizes corresponding to the acquired communication quality of the respective cells.

## Description

### TECHNICAL FIELD

The present invention relates to a radio communication system.

### BACKGROUND ART

In LTE (Long Term Evolution) systems, a high throughput can be achieved through fast retransmission using a HARQ (Hybrid Automatic Repeat Request) . The HARQ is performed in a MAC (Medium Access Control) layer, and in LTE standard, the number of HARQ processes managed at user equipment (UE) and a base station (evolved NodeB: eNB) is determined depending on cell duplex modes and so on. Also, if carrier aggregation is configured, an HARQ entity is configured for each cell or component carrier (CC), and the respective HARQ entities maintain multiple HARQ processes. In HARQ control in the MAC layer, fast retransmission in order of several milliseconds can be achieved, and even if the receiver side have failed to receive data once, the receiver side can receive the data in subsequent retransmissions promptly, which can improve the throughput.

In the LTE system, for data transmission, the MAC layer in the user equipment determines a transport block size (TBS) to transmit data in accordance with a modulation and coding scheme (MCS) indicated in an uplink grant received from the base station and obtains the corresponding amount of data from an RLC (Radio Link Control) layer. Also, for data retransmission, the same transport block size as the initial transmission is used, and a redundancy version transmitted in HARQ retransmission is indicated in a RVI (Redundancy Version Index). If the TBS for the retransmission data differs from the initial transmission, the user equipment cannot combine the initial transmission data with the retransmission data appropriately, and decoding would be unsuccessful.

### Prior Art Document

### [Non-Patent Document]

Non-Patent Document 1: 3GPP TS 36.321 V12.5.0 (2015-03)
Non-Patent Document 2: 3GPP TS 36.322 V12.2.0 (2015-03)

### SUMMARY OF INVENTION

### [PROBLEM TO BE SOLVED BY THE INVENTION]

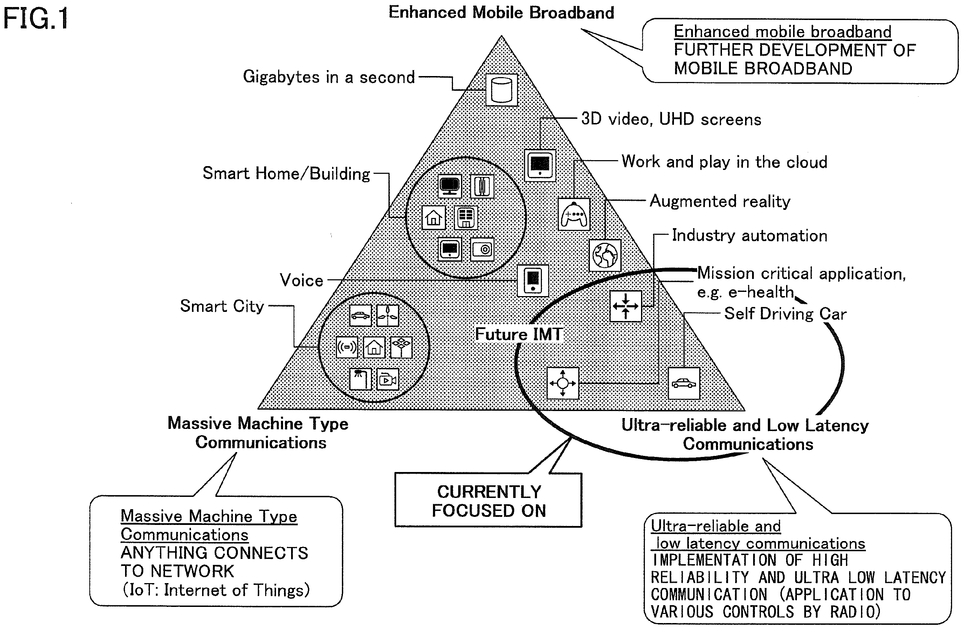

In the fifth generation (5G) communication, three typical use cases as illustrated in FIG. 1 are envisaged. Specifically, the three use cases are a use case where mobile broadband is further developed, a use case where everything is connected to networks such as IoT (Internet of Things) and a use case where communication with high reliability and ultra-low latency is implemented.

In this manner, one requirement of the 5G communication is the highly reliable and ultra-low latency communication. Conventionally, significantly delayed data transmission and reception have been avoided by prioritizing scheduling for services having a strict latency requirement such as an audio service over other logical channels and user equipments. However, in cases where radio quality is insufficient and/or where a cell is congested, even if the priority of the services is increased in the cell, an effect of the latency reduction may be limited.

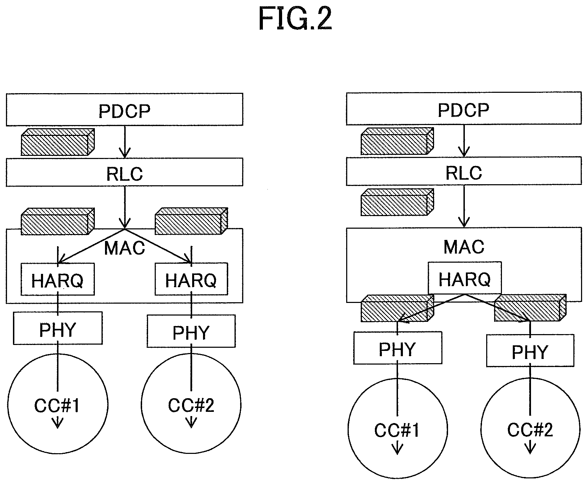

Meanwhile, it is considered that retransmission from an RLC layer may be made faster. For example, as illustrated in the left side in FIG. 2, if the user equipment is communicating with the base station via two component carriers CC#1 and CC#2, the latency can be reduced by promptly delivering retransmission data from the RLC layer to HARQ entities corresponding to the respective CCs. However, an RTT (Round Trip Time) at the RLC layer is tens of milliseconds, and the latency reduction effect may be limited. Also, if radio quality is not good in one cell, data retransmission from the cell may be considered to be delayed, and the latency reduction effect may be limited similarly.

Then, as illustrated in the right side in FIG. 2, it is discussed that short latency is achieved with diversity effect through MAC transmission or retransmission at multiple cells or component carriers (CCs) (HARQ sharing). Specifically, as illustrated, even if the radio quality is not good in one cell or even if data does not arrive at the user equipment due to congestion, the latency can be reduced through multiplexed retransmission of the same retransmission data using resources in the multiple cells as long as the data is received at the user equipment in the other cell.

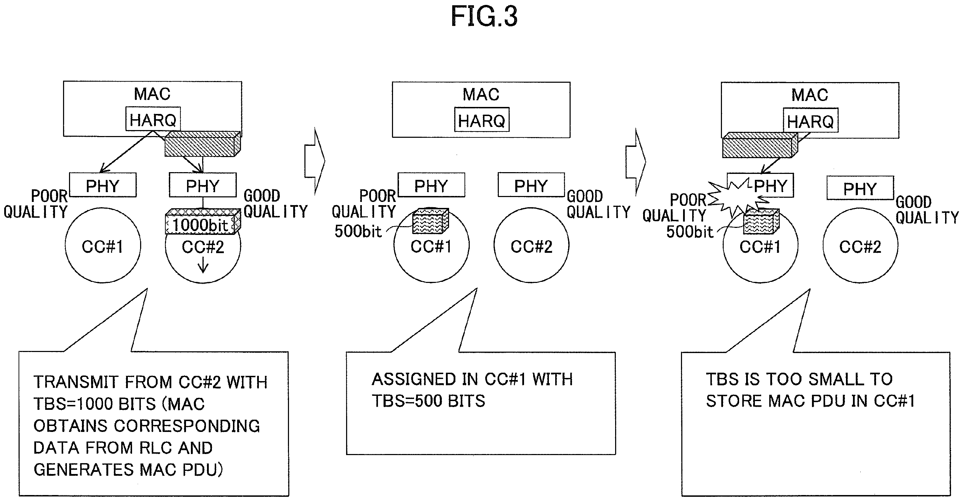

Meanwhile, the transport block size transmitted from HARQ processes is determined based on cell states such as communication quality, the number of schedulable resources or the like in the respective cells. Accordingly, there is a likelihood that the transport block size required for HARQ retransmission of MAC PDUs (Packet Data Units) cannot be reserved in the cell depending on the cell states of the respective HARQ sharing applied cells. For example, the case where initial transmission is performed in a component carrier having good communication quality and retransmission is performed in a component carrier having insufficient communication quality is considered. In this case, the transport block size corresponding to the good communication quality is used in the initial transmission, and data corresponding to the transport block size would be also used in the retransmission in the component carrier having the insufficient communication quality. However, there is a likelihood that the transport block size cannot be reserved in the component carrier having the insufficient communication quality. For example, as illustrated in FIG. 3, the transport block size of 1000 bits is used in CC#2 having relatively high communication quality, and the MAC layer obtains data corresponding to the size from the RLC layer to generate MAC PDUs for transmission. On the other hand, the transport block size of 500 bits is assigned in CC#1 having relatively low communication quality, and the MAC PDUs corresponding to the transport block size of 1000 bits cannot be transmitted in CC#1, which would make it impossible to fulfill the HARQ sharing.

In light of the above-stated problem, an object of the present invention is to provide techniques for controlling the transport block size to implement the HARQ sharing.

### [MEANS FOR SOLVING THE PROBLEM]

In order to achieve the above object, one aspect of the present invention relates to a base station, comprising: a cell management unit configured to manage cells for radio communication with user equipment; and a MAC processing unit configured to control a retransmission operation via multiple cells by using HARQ sharing for managing one or more HARQ processes as a common HARQ process, wherein the cell management unit acquires communication quality of multiple HARQ sharing applied cells, and the MAC processing unit controls to activate transmission via the multiple cells with a minimum transmission data size among transmission data sizes corresponding to the acquired communication quality of the respective cells.

Another aspect of the present invention relates to a base station, comprising: a cell management unit configured to manage cells for radio communication with user equipment; a MAC processing unit configured to control a retransmission operation via multiple cells by using HARQ sharing for managing one or more HARQ processes as a common HARQ process; and an RLC processing unit configured to provide transmission data to the MAC processing unit, wherein the cell management unit acquires communication quality of multiple HARQ sharing applied cells, and upon the communication quality detected in any of the multiple cells falling below a level required to transmit a currently configured transmission data size, the MAC processing unit acquires transmission data having a transmission data size corresponding to the detected communication quality from the RLC processing unit.

Another aspect of the present invention relates to user equipment, comprising: a transmission and reception unit configured to transmit and receive radio signals via a cell served by a base station; a MAC processing unit configured to control a retransmission operation via multiple cells by using HARQ sharing for managing one or more HARQ processes as a common HARQ process; and an RLC processing unit configured to provide transmission data to the MAC processing unit, wherein the transmission and reception unit acquires communication quality of multiple HARQ sharing applied cells, and upon the communication quality detected in any of the multiple cells falling below a level required to transmit a currently configured transmission data size, the MAC processing unit acquires transmission data having a transmission data size corresponding to the detected communication quality from the RLC processing unit.

Another aspect of the present invention relates to a base station, comprising: a cell management unit configured to manage cells for radio communication with user equipment; and a MAC processing unit configured to control a retransmission operation via multiple cells by using HARQ sharing for managing one or more HARQ processes as a common HARQ process, wherein the MAC processing unit transmits bit sequences corresponding to multiple enhanced redundancy versions in respective transmission occasions, and if the MAC processing unit transmits the bit sequences with a smaller transmission data size than a currently configured transmission data size in the retransmission operation, the MAC processing unit transmits the bit sequences with the smaller transmission data size by reducing the multiple enhanced redundancy versions.

Another aspect of the present invention relates to user equipment, comprising: a transmission and reception unit configured to transmit and receive radio signals via a cell served by a base station; and a MAC processing unit configured to control a retransmission operation via multiple cells by using HARQ sharing for managing one or more HARQ processes as a common HARQ process, wherein the MAC processing unit transmits bit sequences corresponding to multiple enhanced redundancy versions in respective transmission occasions, and if the MAC processing unit transmits the bit sequences with a smaller transmission data size than a currently configured transmission data size in the retransmission operation, the MAC processing unit transmits the bit sequences with the smaller transmission data size by reducing the multiple enhanced redundancy versions.

### [ADVANTAGE OF THE INVENTION]

According to the present invention, the transport block size to implement the HARQ sharing can be controlled.

### BRIEF DESCRIPTION OF DRAWINGS

FIG. 1 is a schematic diagram for illustrating typical use cases of the 5G communication;
FIG. 2 is a schematic diagram for illustrating a protocol for HARQ retransmission using multiple cells;
FIG. 3 is a diagram for illustrating HARQ retransmission using multiple cells according to the prior art;
FIG. 4A is a schematic diagram for illustrating a radio communication system according to one embodiment of the present invention;
FIG. 4B is a block diagram for illustrating a hardware arrangement of a base station according to one embodiment of the present invention;
FIG. 4C is a block diagram for illustrating a hardware arrangement of user equipment according to one embodiment of the present invention;
FIG. 5 is a block diagram for illustrating an arrangement of the base station according to a first embodiment of the present invention;
FIG. 6 is a flowchart for illustrating an HARQ transmission operation according to the first embodiment of the present invention;
FIG. 7 is a block diagram for illustrating an arrangement of the base station according to a second embodiment of the present invention;
FIG. 8 is a block diagram for illustrating an arrangement of the user equipment according to the second embodiment of the present invention;
FIG. 9 is a flowchart for illustrating an HARQ transmission operation according to the second embodiment of the present invention;
FIG. 10 is a block diagram for illustrating an arrangement of the base station according to a third embodiment of the present invention;
FIG. 11 is a block diagram for illustrating an arrangement of the user equipment according to the third embodiment of the present invention; and
FIG. 12 is a flowchart for illustrating an HARQ transmission operation according to the third embodiment of the present invention.

### EMBODIMENTS OF THE INVENTION

Embodiments of the present invention are described below with reference to the drawings.

In embodiments below, a base station and user equipment supporting HARQ sharing for managing one or more HARQ processes as a common HARQ process are disclosed. Summarizing the embodiment as stated below, if the common HARQ process is configured, the transport block size for retransmission data is dynamically adjusted depending on degradation of communication quality of respective cells during an HARQ retransmission operation. As a result, it is possible to properly address situations where the transport block size cannot be reserved due to the degraded communication quality in the respective cells, compared to conventional HARQ control where the transport block size configured at initial transmission is fixed and applied in retransmission.

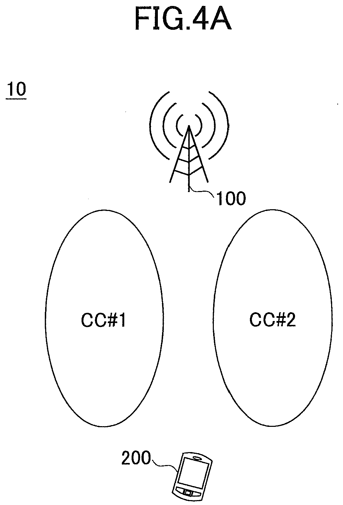

A radio communication system according to one embodiment of the present invention is described with reference to FIG. 4A. FIG. 4A is a schematic diagram for illustrating a radio communication system according to one embodiment of the present invention.

As illustrated in FIG. 4A, a radio communication system 10 has a base station 100 and user equipment 200. For example, the radio communication system 10 may be an LTE system or an LTE-Advanced system. Specifically, as illustrated, the user equipment 200 can use multiple component carriers CC#1 and CC#2 simultaneously to transmit and receive radio signals to/from the base station 100. In the illustrated embodiment, it is illustrated that the user equipment 200 performs carrier aggregation communication with the single base station 100, but the present invention is not limited to it. For example, the user equipment 200 may use component carriers served by multiple base stations 100 simultaneously to perform transmission and reception to/from the multiple base stations 100 simultaneously (dual connectivity). Also in the illustrated embodiment, only the single base station 100 is illustrated, but a large number of base stations 100 are disposed to cover a service area of the radio communication system 10.

The base station 100 establishes a radio connection to the user equipment 200 to transmit downlink (DL) packets received from an upper station or a server communicatively connected on a core network (not shown) to the user equipment 200 as well as transmit uplink (UL) packets received from the user equipment 200 to the server. The base station 100 may have a carrier aggregation function to transmit and receive radio signals to/from the user equipment 200 via multiple carriers simultaneously.

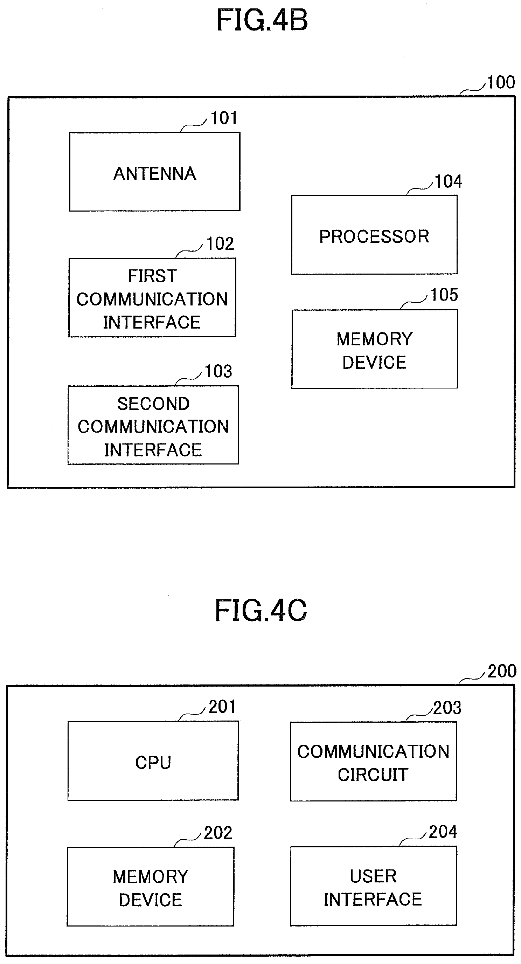

In illustrated in FIG. 4B, the base station 100 is typically arranged with hardware resources such as an antenna 101 for transmitting and receiving radio signals to/from the user equipment 200, a first communication interface 102 (for example, an X2 interface) for communicating with an adjacent base station 100, a second communication interface 103 (for example, an S1 interface) for communicating with the core network, a processor 104 and a circuit for processing signals transmitted and received to/from the user equipment 200 and a memory device 105. Functions and operations of the base station 100 as stated below may be implemented by the processor 104 processing and running data and programs stored in the memory device 105. However, the base station 100 is not limited to the above-stated hardware configuration and may have any other appropriate hardware configuration.

The user equipment 200 communicates with the base station 100 via multiple cells served by the base station 100. Also, the user equipment 200 has a carrier aggregation function to use multiple carriers served by one or more base stations 100 simultaneously to transmit and receive radio signals to/from the base stations 100. Typically, as illustrated, the user equipment 200 may be any appropriate information processing device with a radio communication function such as a smartphone, a mobile phone, a tablet, a mobile router and a wearable terminal. As illustrated in FIG. 4C, the user equipment 200 is arranged with a CPU (Central Processing Unit) 201 such as a processor, a memory device 202 such as a RAM (Random Access Memory) and a flash memory, a radio communication device 203 for transmitting and receiving radio signals to/from the base station 100, a user interface 204 such as an input/output device and a peripheral device and so on. For example, functions and operations of the user equipment 200 as stated below may be implemented by the CPU 201 processing and running data and programs stored in the memory device 202. However, the user equipment 200 is not limited to the above-stated hardware configuration and may be arranged with circuits for implementing one or more of operations as stated below.

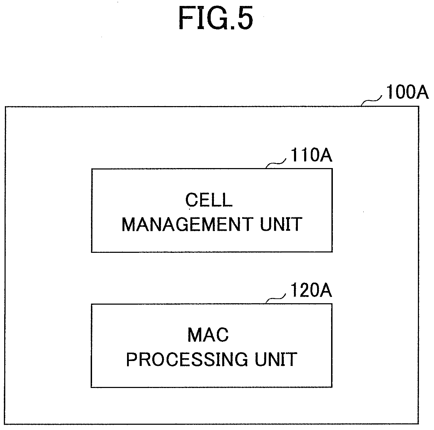

Next, HARQ transmission operations according to the first embodiment of the present invention are described with reference to FIGS. 5-6. FIG. 5 is a block diagram for illustrating an arrangement of the base station according to the first embodiment of the present invention.

As illustrated in FIG. 5, the base station 100A has a cell management unit 110A and a MAC processing unit 120A.

The cell management unit 110A manages cells for radio communication with the user equipment 200. Specifically, the cell management unit 110A acquires communication quality of multiple cells served by the base station 100A and stores the acquired communication quality of the respective cells as cell quality information. For example, for downlink communication, the cell management unit 110A may acquire CQIs (Channel Quality Indicators) of the respective cells from the user equipment 200 and generate the cell quality information based on the acquired CQIs. Also, for uplink communication, the cell management unit 110A may measure reception quality of a PUCCH (Physical Uplink Control Channel), a PUSCH (Physical Uplink Shared Channel), a SRS (Sounding Reference Signal) or the like transmitted from the user equipment 200 and generate the cell quality information based on the measurement results.

The MAC processing unit 120A controls a retransmission operation via multiple cells by using HARQ sharing for managing one or more HARQ processes as a common HARQ process. Specifically, when the base station 100A configures multiple cells for the user equipment 200, the MAC processing unit 120A configures the HARQ sharing for managing one or more HARQ processes configured for these cells as a common HARQ process. For example, if three component carriers CC#1, CC#2 and CC#3 are configured, HARQ processes #0-3 may be shared between CC#1 and CC#2 to be managed as a common HARQ process, and HARQ processes #4-7 may be shared between CC#2 and CC#3 to be managed as a common HARQ process. In this case, the MAC processing unit 120A manages HARQ processes indicated in the configured HARQ processes as the common HARQ process and transmits retransmission data for the common HARQ process to the user equipment 200 via the multiple cells. As a result, the retransmission data can be transmitted to the user equipment 200 more reliably with diversity effect.

In the first embodiment, the cell management unit 110A acquires communication quality of multiple HARQ sharing applied cells, and the MAC processing unit 120A controls to activate transmission via multiple cells with a minimum transmission data size among transmission data sizes corresponding to the acquired communication quality of the respective cells. Specifically, in transmitting data in multiple component carriers associated with the common HARQ process in the HARQ sharing, the MAC processing unit 120A determines the transport block size expected in the respective component carriers based on the cell quality information and activates the transmission with the minimum transport block size among these transport block sizes. For example, in downlink transmission, the MAC processing unit 120A acquires data corresponding to the minimum transport block size from the RLC layer, generates MAC PDUs from the acquired data and transmits the MAC PDUs to the user equipment 200. On the other hand, in uplink transmission, the MAC processing unit 120A transmits an uplink grant indicative of the minimum transport block size to the user equipment 200, and upon receiving the uplink grant, the user equipment 200 performs the uplink transmission with the indicated transport block size. Note that if the receiver side receives retransmission data having a transport block size different from the transport block size received at initial transmission, the receiver side may discard the retransmission data.

In one embodiment, the MAC processing unit 120A may control the number of assigned resource blocks or a modulation and coding scheme in cells to enable transmission with the minimum transmission data size in the retransmission operation. Specifically, if the minimum transport block size configured at the initial transmission cannot be reserved at HARQ retransmission, the MAC processing unit 120A may select the number of assigned resource blocks and/or the MCS such that a transport block size equivalent to the initial transmission can be ensured. In this case, the MAC processing unit 120A would perform aggressive assignment relative to actual communication quality, and there is a likelihood that retransmission data may be lost in the retransmission due to insufficient communication quality. In light of the likelihood, instead of the MCS corresponding to the actual communication quality, the MAC processing unit 120A may select the safe MCS for the actual communication quality, that is, the MCS that can handle the degraded communication quality.

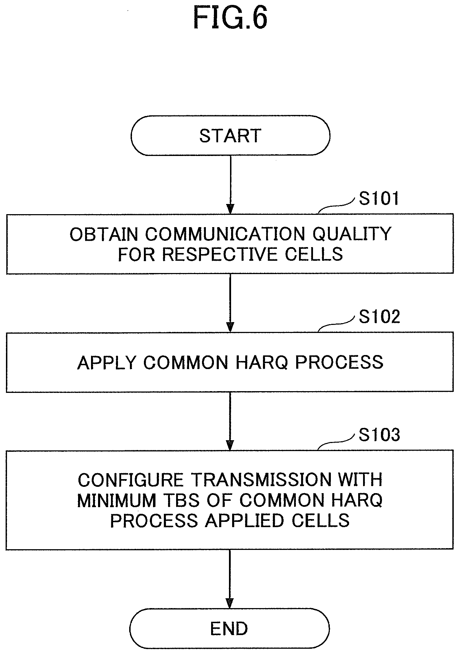

FIG. 6 is a flowchart for illustrating an HARQ transmission operation according to the first embodiment of the present invention. The operation is performed by the base station 100A at initial transmission of downlink data or uplink data.

As illustrated in FIG. 6, at step S101, the base station 100A acquires communication quality of cells for radio communication with the user equipment 200. For example, the base station 100A may use CQIs of the respective cells acquired from the user equipment 200 for downlink communication and/or may use measurement results of reception quality of a PUCCH, a PUSCH, a SRS or the like transmitted from the user equipment 200 for uplink communication to generate the cell quality information.

At step S102, the base station 100A applies the common HARQ process. Specifically, the base station 100A uses the HARQ sharing for managing one or more HARQ processes as the common HARQ process. As a result, if data transmitted from cells associated with the common HARQ processes has to be retransmitted, the data can be retransmitted from the other cells associated with the common HARQ process, which can cause the retransmission data to be received more reliably with the diversity effect.

At step S103, the base station 100A controls to activate HARQ transmission via the multiple cells with the minimum transmission data size among transmission data sizes corresponding to the acquired communication quality of the respective cells. Specifically, the base station 100A applies the minimum transport block size to transmission data for the common HARQ process among the transport block sizes corresponding to respective common HARQ process applied component carriers. For example, for downlink transmission, the base station 100A acquires data corresponding to the minimum transport block size from the RLC layer, generates MAC PDUs from the acquired data and transmits the MAC PDUs to the user equipment 200. On the other hand, for uplink transmission, the base station 100A transmits an uplink grant indicative of the minimum transport block size to the user equipment 200, and upon receiving the uplink grant, the user equipment 200 performs the uplink transmission with the indicated transport block size.

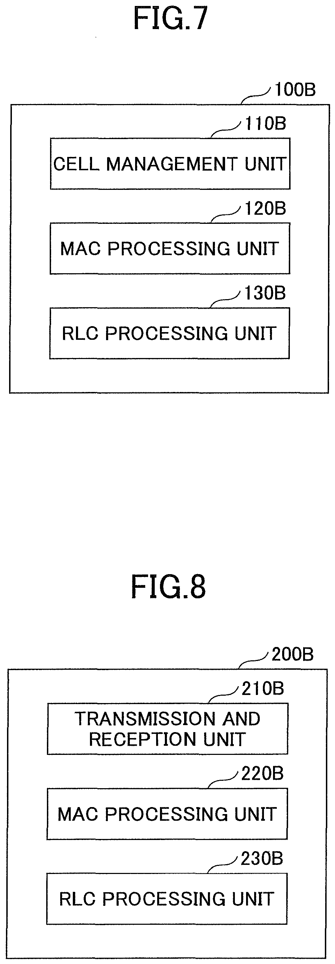

Next, an HARQ transmission operation according to the second embodiment of the present invention is described with reference to FIGS. 7-9. FIG. 7 is a block diagram for illustrating an arrangement of the base station according to the second embodiment of the present invention.

As illustrated in FIG. 7, the base station 100B has a cell management unit 110B, a MAC processing unit 120B and an RLC processing unit 130B.

The cell management unit 110B manages cells for radio communication with the user equipment 200. Specifically, similar to the first embodiment, the cell management unit 110B acquires communication quality of multiple cells served by the base station 100B and stores the acquired communication quality of the respective cells as cell quality information. For example, for downlink communication, the cell management unit 110B may acquire CQIs of the respective cells from the user equipment 200 to generate the cell quality information based on the acquired CQIs. Also, for uplink transmission, the cell management unit 110B may measure reception quality of a PUCCH, a PUSCH, a SRS or the like transmitted from the user equipment 200 to generate the cell quality information based on the measurement results.

The MAC processing unit 120B controls a retransmission operation via one or more cells by using HARQ sharing for managing one or more HARQ processes as a common HARQ process. Specifically, when the base station 100B configures multiple cells for the user equipment 200, the MAC processing unit 120B configures the HARQ sharing for managing one or more HARQ processes configured for these cells as a common HARQ process. In this case, the MAC processing unit 120B manages HARQ processes indicated in the configured HARQ processes as the common HARQ process and transmits retransmission data for the common HARQ process to the user equipment 200 via the multiple cells. As a result, the retransmission data can be transmitted to the user equipment 200 more reliably with the diversity effect.

The RLC processing unit 130B provides transmission data to the MAC processing unit 120B. Specifically, the RLC processing unit 130B provides the MAC processing unit 120B with transmission data corresponding to the transport block size configured by the MAC processing unit 120B.

In the second embodiment, the cell management unit 110B acquires communication quality of multiple HARQ sharing applied cells, and upon the communication quality detected in any of the multiple cells falling below a level required to transmit a currently configured transmission data size, the MAC processing unit 120B indicates this event to the RLC processing unit 130B and acquires transmission data having a transmission data size corresponding to the detected communication quality from the RLC processing unit 130B. Specifically, the cell management unit 110Bmonitors communication quality of these cells during transmission or retransmission of data in multiple component carriers associated with the common HARQ process. Upon detecting the cell whose communication quality falls below the level required to transmit the currently configured transmission data size (or if a scheduling occasion is detected at the cell), the MAC processing unit 120B indicates this event to the RLC processing unit 130B, reconfigures a smaller transport block size corresponding to the detected communication quality and acquires transmission data (RLC PDUs) corresponding to the transport block size from the RLC processing unit 130B. The MAC processing unit 120B generates MAC PDUs from the acquired transmission data and transmits the MAC PDUs to the user equipment 200. The indication from the MAC processing unit 120B to the RLC processing unit 130B may include information (for example, a SN (Sequence Number), a SO (Segment Offset) or the like) for identifying the corresponding HARQ process numbers and/or RLC PDUs (or RLC PDU segments) . As a result, if the transmittable transport block size becomes smaller at HARQ retransmission due to degraded communication quality, the transport block size can be dynamically changed depending on the current communication quality. In other words, the present embodiment can be considered to be equivalent to forcing retransmission at the upper RLC layer to be triggered at retransmission at the MAC layer.

In one embodiment, the RLC processing unit 130B may include a retransmission counter for counting a number of retransmissions of transmission data from the RLC processing unit 130B, and in response to a request for transmission data having the transmission data size corresponding to the detected communication quality from the MAC processing unit 120B, the RLC processing unit 130B may refrain from incrementing the retransmission counter. The RLC processing unit 130B counts the number of retransmissions on a per RLC PDU basis and uses the retransmission counter to retransmit data, which the MAC processing unit 120B has failed to transmit in a retransmission operation, in a retransmission operation at the RLC processing unit 130B. Typically, the retransmission from the RLC processing unit 130B is performed after an excess of the retransmissions at the MAC processing unit 120B. On the other hand, provision of the transmission data from the RLC processing unit 130B involved in the above-stated change in the transport block size by the MAC processing unit 120B is performed before the excess of the retransmissions at the MAC processing unit 120B, which should not be counted as the retransmission from the RLC processing unit 130B. For this reason, if the MAC processing unit 120B requests the RLC processing unit 130B for transmission data corresponding to the changed transport block size, the RLC processing unit 130B may not increment the retransmission counter. Note that although determination as to whether to perform the above operation is made in the base station 100B for downlink, the determination may be made by an indication from the base station 100B for uplink. Specifically, when an uplink grant is assigned by the base station 100B to the user equipment 200, it may be indicated in the uplink grant whether the above control should be performed. Alternatively, if different TBSs (or the corresponding MCSs) are selected for the same HARQ process, the user equipment 200 may make the determination implicitly. Alternatively, both of them may be applied.

FIG. 8 is a block diagram for illustrating an arrangement of the user equipment according to the second embodiment of the present invention. As illustrated in FIG. 8, the user equipment 200B has a transmission and reception unit 210B, a MAC processing unit 220B and an RLC processing unit 230B.

The transmission and reception unit 210B transmits and receives radio signals via a cell served by the base station 100. Specifically, the transmission and reception unit 210B uses multiple component carriers served by the base station 100 to transmit and receive various radio channels such as uplink/downlink control channels and/or uplink/downlink data channels to/from the base station 100. For example, if carrier aggregation is configured for the user equipment 200B, the transmission and reception unit 210B can use these component carriers simultaneously to transmit and receive the various radio channels to/from one or more base stations 100.

The MAC processing unit 220B controls a retransmission operation via multiple cells by using HARQ sharing for managing one or more HARQ processes as a common HARQ process. Specifically, when the base station 100 configures multiple cells for the user equipment 200B, the MAC processing unit 220B configures the HARQ sharing for managing one or more HARQ processes configured for these cells as a common HARQ process. In this case, the MAC processing unit 220B manages HARQ processes indicated in the configured HARQ processes as the common HARQ process and transmits retransmission data for the common HARQ process to the base station 100 via the multiple cells. As a result, the retransmission data can be transmitted to the base station 100 more reliably with the diversity effect.

The RLC processing unit 230B provides transmission data to the MAC processing unit 220B. Specifically, the RLC processing unit 230B provides the MAC processing unit 220B with transmission data corresponding to the transport block size indicated by the MAC processing unit 220B.

In the second embodiment, the transmission and reception unit 210B acquires communication quality of multiple HARQ sharing applied cells, and upon the communication quality detected in any of the multiple cells falling below a level required to transmit a currently configured transmission data size, the MAC processing unit 220B indicates this event to the RLC processing unit 230B and acquires transmission data having a transmission data size corresponding to the detected communication quality from the RLC processing unit 230B. Specifically, the transmission and reception unit 210B monitors communication quality of these cells during transmission or retransmission of data in multiple component carriers associated with the common HARQ process. Upon detecting a cell whose communication quality falls below the level required to transmit the currently configured transmission data size (or if a scheduling occasion is detected at the cell), the MAC processing unit 220B indicates this event to the RLC processing unit 230B, reconfigures a smaller transport block size corresponding to the detected communication quality and acquires transmission data (RLC PDUs) corresponding to the transport block size from the RLC processing unit 230B. The MAC processing unit 220B generates MAC PDUs from the acquired transmission data and transmits the MAC PDUs to the base station 100. The indication from the MAC processing unit 220B to the RLC processing unit 230B may include information (for example, a SN, a SO or the like) for identifying the corresponding HARQ process number and/or RLC PDUs (or RLC PDU segments) . As a result, if the transmittable transport block size becomes smaller at HARQ retransmission due to degraded communication quality or the like, the transport block size can be dynamically changed depending on the current communication quality. In other words, the present embodiment can be considered to be equivalent to forcing retransmission from the upper RLC layer to be triggered at retransmission at the MAC layer.

In one embodiment, the RLC processing unit 230B may include a retransmission counter for counting a number of retransmissions of transmission data from the RLC processing unit 230B, and in response to a request for transmission data having the transmission data size corresponding to the detected communication quality from the MAC processing unit 220B, the RLC processing unit 230B may refrain from incrementing the retransmission counter. The RLC processing unit 230B counts the number of retransmissions on a per RLC PDU (or RLC PDU segment) basis and uses the retransmission counter to retransmit data, which the MAC processing unit 220B has failed to transmit in a retransmission operation, in a retransmission operation at the RLC processing unit 230B. Typically, the retransmission from the RLC processing unit 230B is performed after an excess of the retransmissions at the MAC processing unit 220B. On the other hand, provision of the transmission data from the RLC processing unit 230B involved in the above-stated change in the transport block size by the MAC processing unit 220B is performed before the excess of the retransmissions at the MAC processing unit 220B, which should not be counted as the retransmission from the RLC processing unit 230B. For this reason, if the MAC processing unit 220B requests the RLC processing unit 230B for transmission data corresponding to the changed transport block size, the RLC processing unit 230B may not increment the retransmission counter.

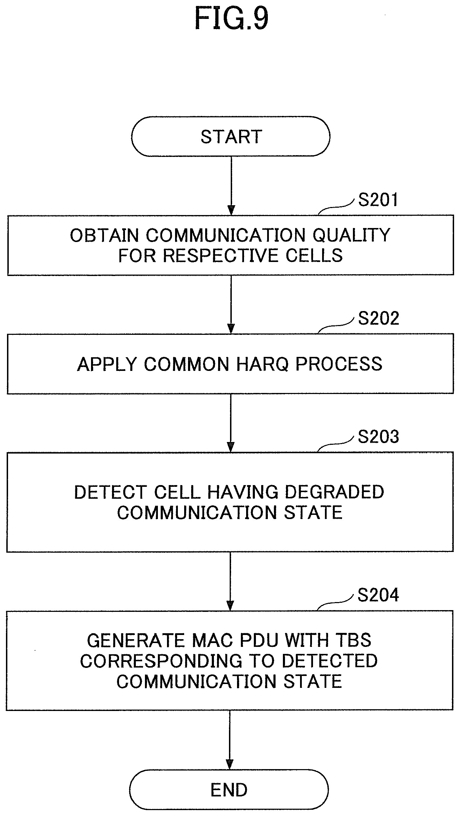

FIG. 9 is a flowchart for illustrating an HARQ transmission operation according to the second embodiment of the present invention. This operation is performed by the transmitter side during transmission and retransmission of downlink data or uplink data. Specifically, the operation is performed by the base station 100B in downlink transmission, and the operation is performed by the user equipment 200B in uplink transmission. Although the operation is focused on the downlink transmission, it could be easily understood by those skilled in the art that the operation can be similarly applied to the uplink transmission.

As illustrated in FIG. 9, at step S201, the base station 100B acquires communication quality of cells for radio communication with the user equipment 200. For example, the base station 100B may acquire CQIs of the respective cells from the user equipment 200 periodically during downlink retransmission.

At step S202, the base station 100B applies a common HARQ process. Specifically, the base station 100B uses the HARQ sharing for managing one or more HARQ processes as a common HARQ process. As a result, if data transmitted from a cell associated with the common HARQ process has to be retransmitted, the data can be retransmitted from the other cells associated with the common HARQ process, and the retransmission data can be received more reliably with the diversity effect.

At step S203, the base station 100B detects that the communication quality detected in any of multiple common HARQ process applied cells has fallen below a level required to transmit the currently configured transmission data size. For example, if the currently configured transport block size corresponds to the CQI index X, upon detecting that the CQI index Y for any of the common HARQ process applied cells is less than X, the base station 100B reconfigures the transport block size corresponding to the detected CQI index Y.

At step S204, the base station 100B reconfigures transmission data with the transmission data size corresponding to the detected communication quality and transmits the transmission data to the user equipment 200. Specifically, the base station 100B generates MAC PDUs corresponding to the transport block size corresponding to the detected CQI index Y and transmits the MAC PDUs to the user equipment 200.

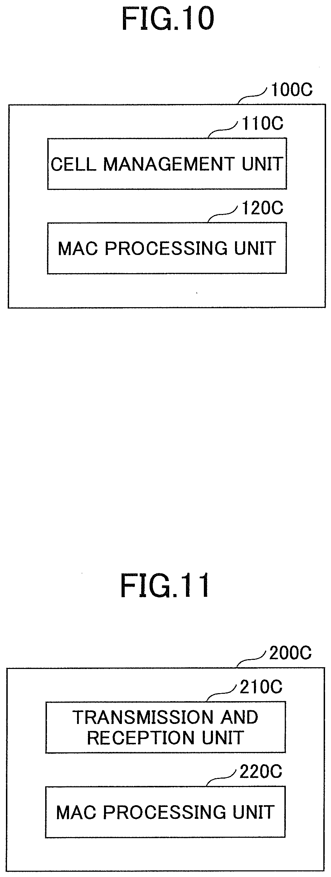

Next, an HARQ transmission operation according to the third embodiment of the present invention is described with reference to FIGS. 10-12. FIG. 10 is a block diagram for illustrating an arrangement of the base station according to the third embodiment of the present invention.

As illustrated in FIG. 10, the base station 100C has a cell management unit 110C and a MAC processing unit 120C.

The cell management unit 110C manages cells for radio communication with the user equipment 200. Specifically, similar to the first and second embodiments, the cell management unit 110C acquires communication quality of multiple cells served by the base station 100C and stores the acquired communication quality of the respective cells as cell quality information. For example, for downlink communication, the cell management unit 110C may acquire CQIs of the respective cells from the user equipment 200 and generate the cell quality information based on the acquired CQIs. Also, for uplink communication, the cell management unit 110C may measure reception quality of a PUCCH, a PUSCH, a SRS or the like transmitted from the user equipment 200 and generate the cell quality information based on the measurement results.

The MAC processing unit 120C controls a retransmission operation via multiple cells by using HARQ sharing for managing one or more HARQ processes as a common HARQ process. Specifically, when the base station 100C configures multiple cells for the user equipment 200, the MAC processing unit 120C configures the HARQ sharing for managing one or more HARQ processes configured for these cells as a common HARQ process. In this case, the MAC processing unit 120C manages HARQ processes indicated in the configured HARQ processes as the common HARQ process and transmits retransmission data for the common HARQ process to the user equipment 200 via the multiple cells. As a result, the retransmission data can be transmitted to the user equipment 200 more reliably with the diversity effect.

In the third embodiment, the MAC processing unit 120C transmits bit sequences corresponding to multiple enhanced redundancy versions in respective transmission occasions, and if the MAC processing unit 120C transmits the bit sequences with a smaller transmission data size than a currently configured transmission data size in the retransmission operation, the MAC processing unit 120C transmits the bit sequences with the smaller transmission data size by reducing the multiple enhanced redundancy versions. Conventionally, the redundancy versions are defined in two bits by redundancy version indices (RVIs) 0-3, and a bit sequence corresponding to any one of the redundancy versions is transmitted in the respective HARQ transmission occasions. In this embodiment, the conventional redundancy versions are enhanced, and bit sequences corresponding to the multiple redundancy versions are transmitted in one transmission occasion. For example, the enhanced redundancy versions may be defined in RVIs 0-15 by using four bits.

The MAC processing unit 120C may transmit the bit sequences corresponding to one or more redundancy versions at one transmission occasion. For example, the MAC processing unit 120C may transmit the bit sequences for RVIs 0-3 in a cell having good communication quality at one transmission occasion. Note that the receiver side can determine up to which redundancy versions the bit sequences are transmitted based on the indicated RVIs and the total number of bit sequences. For example, it is supposed that the bit sequence of 50 bits is transmitted for the respective redundancy versions. Then, if bit sequences of 200 bits together with the indication of RVI 0 are received, the receiver side can determine that the bit sequences for RVIs 0-3 have been transmitted. Note that the bit sequences do not have to be composed in the ascending order of RVIs in practice.

In the present embodiment, if a smaller transport block size than the currently configured transport block size is reconfigured due to degraded communication quality of a cell or the like, the MAC processing unit 120C makes the bit sequences transmitted at one transmission occasion smaller. For example, it is supposed that the bit sequence of 50 bits is transmitted for the respective redundancy versions. Then, upon detecting reduction in communication quality of a cell after transmitting the bit sequences of 200 bits for RVIs 0-3 in initial transmission, the MAC processing unit 120C may retransmit the bit sequences of 100 bits for RVIs 4-5, for example.

Note that even in cases where the redundancy versions can be indicated with fine granularity by using the above-stated enhanced RVIs, the MAC processing unit 120C may apply a predetermined transport block size at initial HARQ transmission. This is because at least an amount of data corresponding to the number of information bits (the number of pre-encoded bits) must be received for decoding the transport block size. In this case, the redundancy versions at the initial HARQ transmission can be represented with the conventional RVI of two bits, and accordingly the number of bits to represent the RVI may be changed depending on a reception state of the user equipment 200. For example, if the user equipment 200 has no HARQ process for retransmission, blind decoding may be performed under assumption where the RVI is represented in two bits. Then, if NACK arises, the user equipment 200 may perform the blind decoding under assumption where the RVI is represented in four bits in subsequent subframes after 4 ms from transmission of a retransmission request. Alternatively, the user equipment 200 may decode subframes under assumption of both the conventional RVI of two bits and the enhanced RVI represented in four bits. Since scheduling either the HARQ process for initial transmission or the HARQ process for retransmission depends on the base station 100C, the user equipment 200 may perform the blind decoding under assumption of both the RVIs.

In one embodiment, only DCI (Downlink Control Information) transmitted in a USS (UE specific Search Space) may be able to be indicated with the enhanced RVI. This is because the enhanced redundancy version is indicated for each user equipment 200. Specifically, the user equipment 200 performs the blind decoding under assumption where two bits are used in a CSS (Common Search Space) and four bits are used in the USS. The CSS is cross carrier scheduled, and it is sufficient to control only independent HARQ processes. As a result, overhead by the enhanced RVIs can be reduced as much as possible.

In one embodiment, the respective enhanced redundancy versions may have different bit sequence lengths. For example, the bit sequence for RVI 10 may have a bit sequence length equal to an information bit length and the bit sequence for RVI 1 may also have a bit sequence length equal to the information bit length whereas the bit sequence for RVI 2 may have a bit sequence length equal to the half of the information bit length and the bit sequence for RVI 3 may have a bit sequence length equal to the half of the half of the information bit length, and so on. In other words, the larger bit sequences are transmitted at initial transmission, and the transport block size may be subsequently reduced in consideration of the likelihood of degradation of communication quality.

Also, the transport block sizes corresponding to the respective RVIs may be predetermined statically or determined in accordance with indications from the MAC processing unit 120C. Note that when the transport block size is changed at the base station 100C, the change may be indicated in the CSS so as to avoid the occurrence of mismatch between the UE and eNB.

FIG. 11 is a block diagram for illustrating an arrangement of the user equipment according to the third embodiment of the present invention.

As illustrated in FIG. 11, the user equipment 200C has a transmission and reception unit 210C and a MAC processing unit 220C.

The transmission and reception unit 210C transmits and receives radio signals via a cell served by the base station 100. Specifically, the transmission and reception unit 210C uses multiple component carriers served by the base station 100 to transmit and receive various radio channels such as uplink/downlink control channels and/or uplink/downlink data channels to/from the base station 100. For example, if carrier aggregation is configured for the user equipment 200C, the transmission and reception unit 210C uses these component carriers simultaneously to transmit and receive the various radio channels to/from one or more base stations 100.

The MAC processing unit 220C controls a retransmission operation via multiple cells by using HARQ sharing for managing one or more HARQ processes as a common HARQ process. Specifically, when the base station 100 configures multiple cells for the user equipment 200C, the MAC processing unit 220C configures the HARQ sharing for managing one or more HARQ processes configured for these cells as a common HARQ process. In this case, the MAC processing unit 220C may manage HARQ processes indicated in the configured HARQ processes as the common HARQ process and transmit retransmission data for the common HARQ process to the base station 100 via the multiple cells. As a result, the retransmission data can be transmitted to the base station 100 more reliably with the diversity effect.

In the third embodiment, the MAC processing unit 220C transmits bit sequences corresponding to multiple enhanced redundancy versions in respective transmission occasions, and if the MAC processing unit 220C transmits the bit sequences with a smaller transmission data size than a currently configured transmission data size in a retransmission operation, the MAC processing unit 220C transmits the bit sequences with the smaller transmission data size by reducing the multiple enhanced redundancy versions. In this embodiment, the conventional redundancy versions are enhanced, and the bit sequences corresponding to the multiple redundancy versions are transmitted in one transmission occasion. For example, the enhanced redundancy versions may be defined in redundancy version indices 0-15 by using four bits.

The MAC processing unit 220C may transmit bit sequences corresponding to one or more redundancy versions depending on communication quality of cells at one transmission occasion. For example, in a cell having good communication quality, the MAC processing unit 220C may transmit bit sequences of RVIs 0-3 at one transmission occasion, for example. In the present embodiment, if smaller transport block size is reconfigured due to reduced communication quality of the cell or the like, the MAC processing unit 220C makes the bit sequences transmitted at one transmission occasion smaller. For example, it is supposed that a bit sequence of 50 bits is transmitted for the respective redundancy versions. Then, upon detecting reduction in the communication quality of the cell after transmitting bit sequences of 200 bits for RVIs 0-3 in initial transmission, the MAC processing unit 220C may retransmit bit sequences of 100 bits for RVIs 4-5, for example.

Note that even in the case where the redundancy versions can be indicated with fine granularity by using the above-stated enhanced RVIs, the MAC processing unit 220C may apply a predetermined transport block size at the initial HARQ transmission.

In one embodiment, the respective enhanced redundancy versions may have different bit sequence lengths. In this case, the larger bit sequences are transmitted at initial transmission, and the transport block size may be subsequently reduced in consideration of the likelihood of reduction in the communication quality.

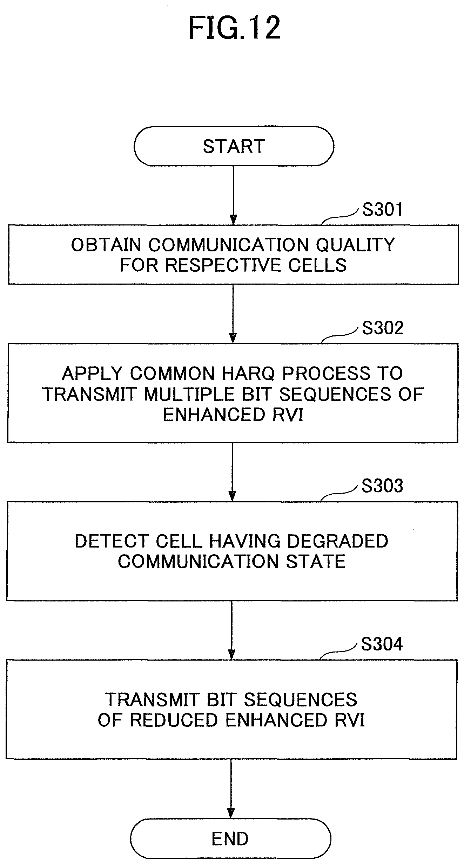

FIG. 12 is a flowchart for illustrating an HARQ transmission operation according to the third embodiment of the present invention. The operation is performed by the transmitter side during transmission and retransmission of downlink data or uplink data. Specifically, the operation is performed by the base station 100C in downlink transmission, and the operation is performed by the user equipment 200C in uplink transmission. Although the downlink transmission is focused on below, it could be easily understood by those skilled in the art that the operation can be similarly applied to the uplink transmission.

As illustrated in FIG. 12, at step S301, the base station 100C acquires communication quality of cells for radio communication with the user equipment 200. For example, the base station 100C may acquire CQIs of the respective cells from the user equipment 200 periodically during downlink retransmission.

At step S302, the base station 100C applies a common HARQ process and transmits bit sequences corresponding to multiple enhanced redundancy versions at respective transmission occasions. Specifically, the base station 100C uses HARQ sharing for managing one or more HARQ processes as the common HARQ process and transmits the bit sequences corresponding to the multiple enhanced redundancy versions at respective HARQ transmission occasions. Conventionally, the redundancy versions are defined in two bits with RVIs 0-3, and a bit sequence corresponding to any one of the redundancy versions is transmitted at the respective HARQ transmission occasions. In the present embodiment, the conventional redundancy versions are enhanced, and the bit sequences corresponding to the multiple redundancy versions are transmitted at one transmission occasion. For example, the enhanced redundancy versions may be defined with RVIs 0-15 by using four bits.

At step S303, the base station 100C detects that communication quality detected in any of multiple common HARQ process applied cells has fallen below a level required to transmit a currently configured transmission data size. In this case, the base station 100C has to transmit the bit sequences with a smaller transmission data size than the currently configured transmission data size in subsequent retransmission operations.

At step S304, the base station 100C transmits the bit sequences with the smaller transmission data size by reducing the enhanced redundancy version. For example, it is supposed that the bit sequences of 50 bits are transmitted for the respective redundancy versions. Then, upon detectingf degradation of the communication quality of a cell after transmitting the bit sequences of 200 bits for RVIs 0-3 at initial transmission, the base station 100C may retransmit the bit sequences of 100 bits for RVIs 4-5, for example.

Although the first to third embodiments have been described separately, it could be understood that these may be combined. For example, the transport block size is configured at initial HARQ transmission in accordance to the first embodiment, and the second and/or third embodiments may be applied with degraded communication quality in subsequent HARQ retransmission as needed.

Although the embodiments of the present invention have been described in detail, the present invention is not limited to the above-stated specific embodiments, and various modifications and variations can be made within the spirit of the present invention as recited in claims.

This international patent application claims the benefit of priority based on Japanese Priority Application No. 2015-094272 filed on May 1, 2015, the entire contents of which are hereby incorporated by reference.

### LIST OF REFERENCE SYMBOLS

10: radio communication system
100: base station
200: user equipment

## Claims

1. A base station, comprising:
a cell management unit configured to manage cells for radio communication with user equipment; and
a MAC processing unit configured to control a retransmission operation via multiple cells by using HARQ sharing for managing one or more HARQ processes as a common HARQ process,
wherein the cell management unit acquires communication quality of multiple HARQ sharing applied cells, and the MAC processing unit controls to activate transmission via the multiple cells with a minimum transmission data size among transmission data sizes corresponding to the acquired communication quality of the respective cells.

2. The base station as claimed in claim 1, wherein the MAC processing unit controls a number of assigned resource blocks or a modulation and coding scheme in the cells to enable transmission with the minimum transmission data size in the retransmission operation.

3. A base station, comprising:
a cell management unit configured to manage cells for radio communication with user equipment;
a MAC processing unit configured to control a retransmission operation via multiple cells by using HARQ sharing for managing one or more HARQ processes as a common HARQ process; and
an RLC processing unit configured to provide transmission data to the MAC processing unit,
wherein the cell management unit acquires communication quality of multiple HARQ sharing applied cells, and upon the communication quality detected in any of the multiple cells falling below a level required to transmit a currently configured transmission data size, the MAC processing unit acquires transmission data having a transmission data size corresponding to the detected communication quality from the RLC processing unit.

4. The base station as claimed in claim 3, wherein the RLC processing unit includes a retransmission counter for counting a number of retransmissions of transmission data from the RLC processing unit, and in response to a request for transmission data having the transmission data size corresponding to the detected communication quality from the MAC processing unit, the RLC processing unit refrains from incrementing the retransmission counter.

5. User equipment, comprising:
a transmission and reception unit configured to transmit and receive radio signals via a cell served by a base station;
a MAC processing unit configured to control a retransmission operation via multiple cells by using HARQ sharing for managing one or more HARQ processes as a common HARQ process; and
an RLC processing unit configured to provide transmission data to the MAC processing unit,
wherein the transmission and reception unit acquires communication quality of multiple HARQ sharing applied cells, and upon the communication quality detected in any of the multiple cells falling below a level required to transmit a currently configured transmission data size, the MAC processing unit acquires transmission data having a transmission data size corresponding to the detected communication quality from the RLC processing unit.

6. The user equipment as claimed in claim 5, wherein the RLC processing unit includes a retransmission counter for counting a number of retransmissions of transmission data from the RLC processing unit, and in response to a request for transmission data having the transmission data size corresponding to the detected communication quality from the MAC processing unit, the RLC processing unit refrains from incrementing the retransmission counter.

7. A base station, comprising:
a cell management unit configured to manage cells for radio communication with user equipment; and
a MAC processing unit configured to control a retransmission operation via multiple cells by using HARQ sharing for managing one or more HARQ processes as a common HARQ process,
wherein the MAC processing unit transmits bit sequences corresponding to multiple enhanced redundancy versions in respective transmission occasions, and if the MAC processing unit transmits the bit sequences with a smaller transmission data size than a currently configured transmission data size in the retransmission operation, the MAC processing unit transmits the bit sequences with the smaller transmission data size by reducing the multiple enhanced redundancy versions.

8. The base station as claimed in claim 7, wherein the respective enhanced redundancy versions have different bit sequence lengths.

9. User equipment, comprising:
a transmission and reception unit configured to transmit and receive radio signals via a cell served by a base station; and
a MAC processing unit configured to control a retransmission operation via multiple cells by using HARQ sharing for managing one or more HARQ processes as a common HARQ process,
wherein the MAC processing unit transmits bit sequences corresponding to multiple enhanced redundancy versions in respective transmission occasions, and if the MAC processing unit transmits the bit sequences with a smaller transmission data size than a currently configured transmission data size in the retransmission operation, the MAC processing unit transmits the bit sequences with the smaller transmission data size by reducing the bit sequences corresponding to the multiple enhanced redundancy versions.

10. The user equipment as claimed in claim 9, wherein the respective enhanced redundancy versions have different bit sequence lengths.
